# EUROPÄISCHE PATENTANMELDUNG

(11) **EP 4 663 482 A1**
(43) Veröffentlichungstag der Anmeldung: **17.12.2025**
(21) Anmeldenummer: 25174614.5
(22) Anmeldetag: 06.05.2025
(51) Int. Cl.: B60R 7/04, B60R 7/06

(54) **AUFBEWAHRUNGSSYSTEM FÜR EIN KRAFTFAHRZEUG MIT MEHREREN SYSTEMEINSÄTZEN MIT GLEICHER ÄUSSERER GEOMETRIE SOWIE KRAFTFAHRZEUG MIT EINEM SOLCHEN AUFBEWAHRUNGSSYSTEM**

(30) Priorität: 14.06.2024 DE 102024116774
(71) Anmelder: AUDI AG, 85057 Ingolstadt (DE)
(72) Erfinder: Hélot, Jacques, 85051 Ingolstadt (DE); Wall, Christian, 85122 Hitzhofen (DE)

(57) **Zusammenfassung**

Beschrieben wird ein Aufbewahrungssystem (10) für ein Kraftfahrzeug (200) mit mehreren Systemaufnahmen (12); mehreren Systemeinsätzen (14); wobei die Systemeinsätze (14) eine einheitliche äußere Geometrie aufweisen; wobei jede Systemaufnahme (12) einen zu der äußeren Geometrie der Systemeinsätze (14) korrespondierenden Aufnahmeraum (16) auf-weist, derart, dass jeder Systemeinsatz (14) in jeder Systemaufnahme (12) positionierbar ist. Dabei ist vorgesehen, dass wenigstens zwei der mehreren Systemeinsätze (14) eine innerhalb der einheitlichen äußeren Geometrie angeordnete unterschiedliche Einsatzraumeinteilung (ER) aufweisen. Ferner wird ein Kraftfahrzeug (200) mit einem solchen Aufbewahrungssystem (10) beschrieben.

## Beschreibung

Die Erfindung betrifft ein Aufbewahrungssystem für ein Kraftfahrzeug mit mehreren Systemaufnahmen; mehreren Systemeinsätzen; wobei die Systemeinsätze eine einheitliche äußere Geometrie aufweisen; wobei jede Systemaufnahme einen zu der äußeren Geometrie der Systemeinsätze korrespondierenden Aufnahmeraum aufweist, derart, dass jeder Systemeinsatz in jeder Systemaufnahme positionierbar ist.

Aus dem Stand der Technik sind verschiedene Ansätze für Aufbewahrungsmöglichkeiten im Bereich einer Mittelkonsole eines Kraftfahrzeugs bekannt. Es wird hierzu beispielsweise auf die DE 199 08 139 A1 und die DE 10 2006 048 565 A1 hingewiesen.

Bislang bekannte Ablagen in Kraftfahrzeugen bieten keine Möglichkeit, unterschiedliche externe Komponenten systematisch aufzunehmen. So ist es beispielweise nicht möglich, in einem Fach einer Mittelkonsole wahlweise aufgestellte Getränkebehälter, wie etwa Flaschen, Dosen oder Becher, oder mehrere Aufnahmeboxen für Essen oder sonstiges Ladegut, zu verstauen.

Die der Erfindung zu Grunde liegende Aufgabe wird darin gesehen, ein Aufbewahrungssystem für ein Kraftfahrzeug anzugeben, bei dem die obigen Nachteile vermieden werden und insbesondere eine systematisierte und bedarfsweise austauschbare Aufbewahrung von verschiedenem Ladegut ermöglicht ist.

Diese Aufgabe wird gelöst durch ein Aufbewahrungssystem und ein Kraftfahrzeug mit den Merkmalen des jeweiligen unabhängigen Patentanspruchs. Vorteilhafte Ausgestaltungen mit zweckmäßigen Weiterbildungen sind in den abhängigen Patentansprüchen angegeben.

Vorgeschlagen wird also ein Aufbewahrungssystem für ein Kraftfahrzeug mit mehreren Systemaufnahmen; mehreren Systemeinsätzen; wobei die Systemeinsätze eine einheitliche äußere Geometrie aufweisen; und wobei jede Systemaufnahme einen zu der äußeren Geometrie der Systemeinsätze korrespondierenden Aufnahmeraum aufweist, derart, dass jeder Systemeinsatz in jeder Systemaufnahme positionierbar ist. Dabei ist vorgesehen, dass wenigstens zwei der mehreren Systemeinsätze eine innerhalb der einheitlichen äußeren Geometrie angeordnete, unterschiedliche Einsatzraumeinteilung aufweisen.

Hierdurch ist es möglich, wenigstens zwei Systemeinsätze bereitzustellen, die bezogen auf ihre äußere Dimensionierung bzw. Formgebung im Wesentlichen gleich ausgestaltet sind, aber einen Einsatzinnenraum aufweisen, der für die Aufnahme von unterschiedlichem Ladegut mittels der betreffenden Einsatzraumeinteilung vorbereitet ist. Somit kann verschiedenes Ladegut innerhalb eines betreffenden Systemeinsatzes verstaut werden und die Systemeinsätze können jeweils in einer beliebigen Systemaufnahme angeordnet werden.

Bei dem Aufbewahrungssystem können die Systemeinsätze einen Haltegriff aufweisen, der zwischen einer Tragestellung und einer Aufnahmestellung beweglich ist. Hierdurch kann ein Systemeinsatz einfach ergriffen werden und in eine Systemaufnahme eingeführt bzw. eingesetzt oder aus dieser herausgenommen werden. Fernen können die Systemeinsätze auf diese Weise aus einer Systemaufnahme entnommen werden und von einer Bedienperson zu einem anderen Ort getragen werden.

Bei dem Aufbewahrungssystem kann jeder Systemeinsatz einen Einsatzboden und wenigstens zwei mit dem Einsatzboden verbundene Einsatzwände aufweisen. Mit anderen Worten kann ein Systemeinsatz zumindest drei Begrenzungswände aufweisen, die etwa U-förmig (mit ggf. abgerundeten Ecken) angeordnet sind.

Bei dem Aufbewahrungssystem kann jeder Systemeinsatz drei Einsatzwände aufweisen und nach vorne oder/und nach oben hin frei zugänglich ist. Hierdurch kann der Systemeinsatz ausreichend stabil und gleichzeitig für einen bestimmten Zweck optimal zugänglich ausgestaltet werden.

Bei dem Aufbewahrungssystem kann einer der Systemeinsätze einen lösbaren Einsatzdeckel aufweisen. Dabei kann der Einsatzdeckel von dem oben erwähnten Haltegriff gesondert ausgeführt sein, so dass eine Tragbarkeit des Systemeinsatzes mit und ohne Einsatzdeckel möglich ist. Es ist aber auch denkbar, dass der Einsatzdeckel den Tragegriff aufweist, so dass ein betreffender Systemeinsatz nur mit darauf angeordnetem, und fest verbundenem Einsatzdeckel transportierbar ist.

Bei dem Aufbewahrungssystem kann die Einsatzraumeinteilung von einem der Systemeinsätze wenigstens einen im Wesentlichen horizontal angeordneten Fachboden aufweisen, derart, dass wenigstens zwei von vorne zugängliche Einsatzfächer gebildet sind.

Das Aufbewahrungssystem kann auch auf die Dimensionen der Einsatzfächer abgestimmte bzw. passende Aufbewahrungsboxen aufweisen, die in ein jeweiliges Einsatzfach einschiebbar und aus diesem herausnehmbar sind.

Bei dem Aufbewahrungssystem kann die Einsatzraumeinteilung von einem der Systemeinsätze wenigstens eine im Wesentlichen horizontal angeordnete Halterung mit mehreren Halterungsöffnungen aufweisen, derart, dass mehrere von oben zugängliche Getränkebehälterhalterungen gebildet sind. Dabei können die Halterungsöffnungen kreisförmig ausgebildet sein und einen Durchmesser aufweisen, der etwas größer als übliche Getränkebehälter, wie etwa Flaschen, Dosen, Trinkbecher oder dergleichen, ist.

Bei dem Aufbewahrungssystem können die Systemeinsätze getrennt von den Systemaufnahmen nutzbar sein, insbesondere mittels des Haltegriffs in der Tragestellung von einer Bedienperson transportierbar sein.

Werden mittels der Systemeinsätze beispielweise Esswaren oder/und Getränke transportiert, können die Systemeinsätze beispielweise während einer Fahrtunterbrechung aus dem Kraftfahrzeug entnommen und zu einem Essensplatz mitgenommen werden. Die Systemeinsätze können auch vorbereitend etwa in einer Küche mit Esswaren oder/und Getränken bestückt werden und dann vor Fahrtantritt in jeweiligen Systemaufnahmen in einem Kraftfahrzeug untergebracht werden.

Ein Kraftfahrzeug kann mit einem oben beschriebenen Aufbewahrungssystem ausgerüstet sein, wobei in dem Kraftfahrzeug wenigstens zwei Systemaufnahmen an unterschiedlichen Positionen im Fahrzeuginnenraum angeordnet sind. Beispielsweise kann eine Systemaufnahme in einer Mittelkonsole zwischen Vordersitzen des Kraftfahrzeugs vorgesehen sein und eine weitere Systemaufnahme kann im Bereich einer Rückenlehne von einer hinteren Sitzreihe vorgesehen sein. Auch die Anordnung von wenigstens einer Systemaufnahme in einem Gepäckaufnahmeraum (Kofferraum) ist möglich.

Bei dem Kraftfahrzeug kann eine der Systemaufnahmen so positioniert sein, dass sie von außerhalb des Kraftfahrzeugs zugänglich ist. Dabei kann die Systemaufnahme beispielweise sehr nahe an einer Gepäckraumhaube angeordnet sein, so dass bei geöffneter Gepäckraumhaube ein direkter Zugang zu der Systemaufnahme ermöglicht ist. Es ist aber auch denkbar, dass an dem Kraftfahrzeug karosserieseitig eine zusätzliche Klappe vorgesehen ist, hinter der eine Systemaufnahme angeordnet ist.

Weitere Vorteile und Einzelheiten der Erfindung ergeben sich aus der nachfolgenden Beschreibung von Ausführungsformen unter Bezugnahme auf die

Figuren. Dabei zeigt:
- Fig. 1: vereinfacht und schematisch ein Kraftfahrzeug mit einem Aufbewahrungssystem;
- Fig. 2: vereinfacht und schematisch eine Ausführungsform eines Systemeinsatzes;
- Fig. 3: vereinfacht und schematisch eine Ausführungsform eines Systemeinsatzes;
- Fig. 4: vereinfacht und schematisch weitere Ausführungsformen eines Systemeinsatzes;
- Fig. 5: vereinfacht und schematisch die Verwendung eines Systemeinsatzes außerhalb eines Kraftfahrzeugs.

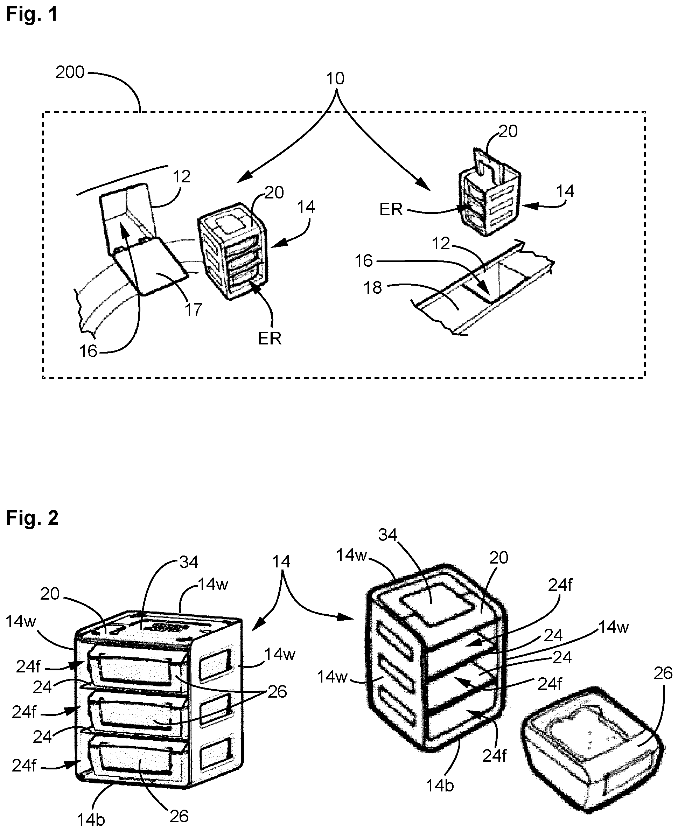

In Fig. 1 ist vereinfacht und schematisch ein Aufbewahrungssystem 10 für ein hier lediglich als gestricheltes Rechteck illustriertes Kraftfahrzeug 200 gezeigt.

Das Aufbewahrungssystem 10 umfasst mehrere Systemaufnahmen 12 und mehrere Systemeinsätze 14. Dabei weisen die Systemeinsätze 14 eine einheitliche äußere Geometrie bzw. äußere Form auf. Insbesondere sind äußere Dimensionierungen, wie Höhe, Breite und Tiefe der Systemeinsätze identisch gehalten.

Jede Systemaufnahme 12 weist einen zu der äußeren Geometrie bzw. Form der Systemeinsätze 14 korrespondierenden Aufnahmeraum 16 auf, derart, dass jeder Systemeinsatz 14 in jeder Systemaufnahme 12 positionierbar ist bzw. angeordnet werden kann.

In dem Beispiel der Fig. 1 sind in dem Kraftfahrzeug 200 die zwei Systemaufnahmen 12 an unter-schiedlichen Positionen in einem hier nicht genauer dargestellten Fahrzeuginnenraum angeordnet. Die in Fig. 1 links dargestellte Systemaufnahme 12 kann beispielsweise seitlich in einem Gepäckaufnahmeraum (Kofferraum) bzw. einer seitlichen Innenverkleidung angeordnet sein. Die in Fig. 1 rechts dargestellte Systemaufnahme 12 kann beispielsweise in einer hier nur angedeuteten Mittelkonsole 18, etwa zwischen zwei Vordersitzen des Kraftfahrzeugs 200, angeordnet sein.

Die in Fig. 1 illustrierten Positionen von Systemaufnahmen 12 sind rein beispielhaft. Es ist auch denkbar, dass in der Mittelkonsole 18 zwei Systemaufnahmen 12 in einer Fahrzeuglängsrichtung hintereinander angeordnet sind. Ferner kann eine Systemaufnahme 12 auch zwischen hinteren Sitzen oder im Bereich einer Rückenlehne einer hinteren Sitzbank vorgesehen sein. Denkbar ist auch das Bereitstellen einer Systemaufnahme 12 im Bereich eines Handschuhfachs.

Eine der Systemaufnahmen 12 kann in dem Kraftfahrzeug 200 auch so positioniert sein, dass sie von außerhalb des Kraftfahrzeugs 200 zugänglich ist.

Wie aus der Fig. 1 in der linken Darstellung ersichtlich, kann eine Systemaufnahme 12 bzw. ihr Aufnahmeraum 16 mittels einer Klappe 17 (hier im geöffneten Zustand gezeigt) abdeckbar sein bzw. durch die Klappe 17 geschlossen werden. Dabei ist die Systemaufnahme 12 bzw. ist der Aufnahmeraum 16 so dimensioniert, dass die Klappe 17 auch mit darin aufgenommenem Systemeinsatz 14 geschlossen werden kann.

**In** der Fig. 1 sind rein beispielhaft zwei Systemeinsätze 14 gezeigt, die gleichartig ausgebildet sind.

Die Systemeinsätze 14 weisen jeweils einen Haltegriff 20 auf, der zwischen einer Tragestellung (rechts in Fig. 1 gezeigt) und einer Aufnahmestellung (links in Fig. 1 gezeigt) beweglich ist.

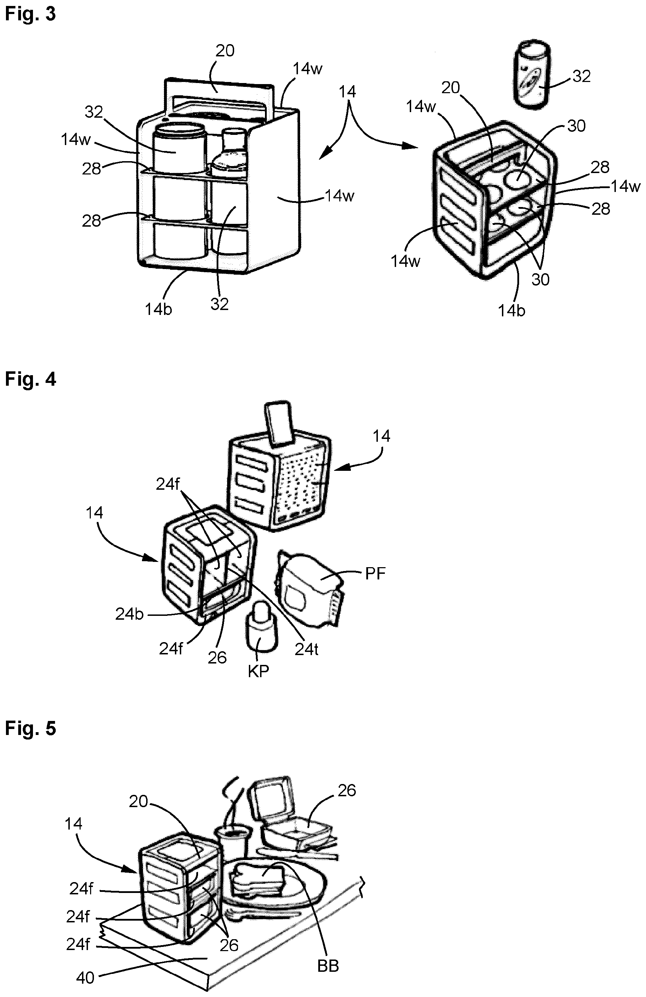

Bei dem Aufnahmesystem 10 weisen wenigstens zwei der mehreren Systemeinsätze 14 eine innerhalb der einheitlichen äußeren Geometrie angeordnete unterschiedliche Einsatzraumeinteilung ER auf, was nachfolgend unter Bezugnahme auf die Fig. 2 und 3 beispielhaft beschrieben wird.

In Fig. 2 ist aus etwas unterschiedlichen Perspektiven ein Systemeinsatz 14 gezeigt, bei dem die Einsatzraumeinteilung zwei im Wesentlichen horizontal angeordnete Fachböden 24 aufweist, derart, dass wenigstens drei von vorne zugängliche Einsatzfächer 24f gebildet sind.

In die Einsatzfächer 24f können insbesondere passende Aufbewahrungsboxen 26 einführbar bzw. eingeführt sein. In den Aufbewahrungsboxen können beispielweise Essware oder sonstige Gegenstände, wie beispielweise Besteck oder Servietten oder dergleichen aufgenommen sein.

Es wird darauf hingewiesen, dass die Ausgestaltung mit zwei Fachböden 24 und 3 Einsatzfächern 24f rein beispielhaft ist. Es können auch nur ein Fachboden 24 oder mehr als zwei Fachböden 24 vorgesehen sein.

In Fig. 3 ist aus etwas unterschiedlichen Perspektiven ein Systemeinsatz 14 gezeigt, bei dem die die Einsatzraumeinteilung zwei im Wesentlichen horizontal angeordnete Halterungen 28 mit mehreren Halterungsöffnungen 30 aufweist, derart, dass mehrere von oben zugängliche Halterungen für Getränkebehälter 32, wie etwa Flaschen oder Dosen oder dergleichen, gebildet sind.

Wie aus den Fig. 2 und 3 ersichtlich, weist jeder Systemeinsatz 14 einen Einsatzboden 14b und wenigstens zwei mit dem Einsatzboden verbundene Einsatzwände 14w auf. Insbesondere kann jeder Systemeinsatz 14 drei Einsatzwände 14w aufweisen, wobei er nach vorne oder/und nach oben hin frei zugänglich ist.

Der in Fig. 2 gezeigte Systemeinsatz 14 weist einen insbesondere lösbaren Einsatzdeckel 34 auf. Im gezeigten Beispiel kann der Einsatzdeckel 34 auch fest mit den Einsatzwänden 14w verbunden sein. Dabei kann beispielweise der Haltegriff 20 mit dem Einsatzdeckel 34 bzw. zwei Einsatzwänden 14w beweglich verbunden sein.

In Fig. 4 sind beispielhaft zwei weitere Konfigurationsmöglichkeiten für die Einsatzraumeinteilung von Systemeinsätzen 14 illustriert.

Der links unten dargestellte Systemeinsatz 14 weist in einem oberen Bereich zwei voneinander getrennte Einsatzfächer 24f auf, die durch eine vertikale Trennwand 24t voneinander getrennt sind. Darunter ist mittels eines Fachbodens 24b ein weiteres Einsatzfach 24f gebildet, in dem eine Aufnahmebox 26 angeordnet ist. Bei einer solchen Einteilung des Systemeinsatzes 14 können beispielsweise weitere Gegenstände, wie etwa Packungen für Frischtücher PF oder kosmetische Produkte KP aufbewahrt werden.

Der oben rechts dargestellte Systemeinsatz 14 weist einen darin aufgenommenen Lautsprecher 42 auf. Ein solcher Systemeinsatz 14 kann beispielweise auch eine hier nicht gezeigte Batterieeinheit aufweisen, die dazu genutzt werden kann, ein Mobiltelefon 44 oder dergleichen aufzuladen, insbesondere wenn das Mobiltelefon 44 dazu benutzt wird, Audiodateien mittels des Lautsprechers 42 wiederzugeben. Ein solcher Systemeinsatz 14 mit Lautsprecher kann beispielweise außerhalb des Kraftfahrzeugs 200 genutzt werden.

In Fig. 5 ist vereinfacht illustriert, dass ein Systemeinsatz 14 (oder auch mehrere Systemeinsätze 14) getrennt von den Systemaufnahmen 12 (siehe Fig. 1) nutzbar sind, etwa auf einer hier nur angedeuteten Ablagefläche 40, wie etwa einem Tisch oder dergleichen. Insbesondere können die Systemeinsätze 14 mittels des Haltegriffs 20 in der Tragestellung von einer Bedienperson transportiert werden. Aus dem Beispiel der Fig. 5 ist beispielweise ersichtlich, dass eine Aufbewahrungsbox 26 aus dem Systemeinsatz 14 entnommen worden und geöffnet worden ist, um ein belegtes Brot BB herausnehmen zu können.

Die in Fig. 5 rechts oben ersichtliche Aufbewahrungsbox 26 war beispielsweise in dem obersten Einsatzfach 24f aufgenommen, das hier leer dargestellt ist. In den beiden anderen Einsatzfächern 24f sind noch jeweilige Aufbewahrungsboxen 26 enthalten.

Zusammenfassend wird also eine Kombination aus unterschiedlichen Systemeinsätzen 14 (Aufnahmeeinheiten oder auch Racks) vorgeschlagen, die im Kraftfahrzeug 200 an verschiedenen Orten, wie etwa Mittelkonsole, Frontbereich und Rearbereich, Kofferraum, mit externen Zugänge über Klappen an der Außenkarosserie, etc. verstaut werden können. Die Verstaumöglichkeiten sind dabei bezüglich der Größe auf die Systemeinsätze 14 bzw. Racks normiert und bieten an jeder Stelle eine auf den Systemeinsatz 14 abgestimmte eindeutige Positioniermöglichkeit, so dass jeder Systemeinsatz 14 bzw. jedes Rack kann an jedem normierten Ablageort (Systemaufnahme 12) verstaut werden kann.

## Patentansprüche

1. Aufbewahrungssystem (10) für ein Kraftfahrzeug (200) mit
mehreren Systemaufnahmen (12);
mehreren Systemeinsätzen (14);
wobei die Systemeinsätze (14) eine einheitliche äußere Geometrie aufweisen;
wobei jede Systemaufnahme (12) einen zu der äußeren Geometrie der Systemeinsätze (14) korrespondierenden Aufnahmeraum (16) aufweist, derart, dass jeder Systemeinsatz (14) in jeder Systemaufnahme (12) positionierbar ist;
**dadurch gekennzeichnet, dass**
wenigstens zwei der mehreren Systemeinsätze (14) eine innerhalb der einheitlichen äußeren Geometrie angeordnete unterschiedliche Einsatzraumeinteilung (ER) aufweisen.

2. Aufbewahrungssystem (10) nach Anspruch 1, **dadurch gekennzeichnet, dass** die Systemeinsätze (14) einen Haltegriff (20) aufweisen, der zwischen einer Tragestellung und einer Aufnahmestellung beweglich ist.

3. Aufbewahrungssystem (10) nach Anspruch 1 oder 2, **dadurch gekennzeichnet dass** jeder Systemeinsatz (14) einen Einsatzboden (14b) und wenigstens zwei mit dem Einsatzboden (14b) verbundene Einsatzwände (14w) aufweist.

4. Aufbewahrungssystem (10) nach Anspruch 3, **dadurch gekennzeichnet, dass** jeder Systemeinsatz (14) drei Einsatzwände (14w) aufweist und nach vorne oder/und nach oben hin frei zugänglich ist.

5. Aufbewahrungssystem (10) nach Anspruch 3 oder 4, **dadurch gekennzeichnet, dass** einer der Systemeinsätze (14) einen lösbaren Einsatzdeckel (34) aufweist.

6. Aufbewahrungssystem (10) nach einem der vorhergehenden Ansprüche, **dadurch gekennzeichnet, dass** die Einsatzraumeinteilung (ER) von einem der Systemeinsätze (14) wenigstens einen im Wesentlichen horizontal angeordneten Fachboden (24) aufweist, derart, dass wenigstens zwei von vorne zugängliche Einsatzfächer (24f) gebildet sind.

7. Aufbewahrungssystem (10) nach einem der vorhergehenden Ansprüche, dass die Einsatzraumeinteilung (ER) von einem der Systemeinsätze (14) wenigstens einen im Wesentlichen horizontal angeordnete Halterung (28) mit mehreren Halterungsöffnungen (30) aufweist, derart, dass mehrere von oben zugängliche Halterungen für Getränkebehälter (32) gebildet sind.

8. Aufbewahrungssystem (10) nach einem der vorhergehenden Ansprüche, **dadurch gekennzeichnet, dass** die Systemeinsätze (14) getrennt von den Systemaufnahmen (12) nutzbar sind, insbesondere mittels des Haltegriffs (20) in der Tragestellung von einer Bedienperson transportierbar sind.

9. Kraftfahrzeug (200) mit einem Aufbewahrungssystem (10) gemäß einem der vorhergehenden Ansprüche, wobei in dem Kraftfahrzeug (200) wenigstens zwei Systemaufnahmen (12) an unterschiedlichen Positionen im Fahrzeuginnenraum angeordnet sind.

10. Kraftfahrzeug (200) nach Anspruch 9, **dadurch gekennzeichnet, dass** eine der Systemaufnahmen (12) so positioniert ist, dass sie von außerhalb des Kraftfahrzeugs zugänglich ist.
